# EUROPEAN PATENT APPLICATION

(11) **EP 4 659 893 A1**
(43) Date of publication of application: **10.12.2025**
(21) Application number: 24920724.2
(22) Date of filing: 24.04.2024
(51) Int. Cl.: B23P 19/04

(54) **CRIMPING DEVICE, CELL PRODUCTION EQUIPMENT, AND COMPOSITE CELL PRODUCTION EQUIPMENT**

(60) Divisional application: 25195278.4
(71) Applicant: G-Tekt Corporation, Saitama-city, Saitama 330-0854 (JP)
(72) Inventor: MITSUDA, Zenichiro, Koka-shi, Shiga 5280212 (JP); THOMAS, Nick, Brockworth, Gloucester GL34AJ (GB); FREEBURY, Mark, Brockworth, Gloucester GL34AJ (GB); WEAVING, Steve, Brockworth, Gloucester GL34AJ (GB)
(74) Representative: Berghofer, Benedikt
(86) International application number: PCT/JP2024/015976
(87) International publication number: WO 2025/224855

(57) **Abstract**

A crimping device 20 that crimps one of a nut and a bolt to a metal panel includes an upper stroke displacement gauge 37 that measures a stroke when crimping is performed; a pressing force gauge 38 that measures a pressing force when crimping is performed; and a control unit 43 that determines whether a crimping result is a pass, based on stroke information from the stroke displacement gauge 37 and pressing force information from the pressing force gauge 38. The control unit 43 includes a first pass determination criterion for the nut and a second pass determination criterion for the bolt.

## Description

### TECHNICAL FIELD

The present invention relates to a crimping device that crimps a nut or bolt to a metal panel, and a cell production facility including the crimping device.

### BACKGROUND ART

It is known that a nut or a bolt is fixed to a metal panel by spot welding. However, the heat of welding may cause the nut or bolt to thermally deform.

In addition, it is also known that a nut or bolt is fixed to the metal panel using an adhesive. However, since it takes a certain amount of time for the adhesive to solidify and exhibit bonding strength, productivity decreases.

Crimping is known as an alternative technique. Since crimping is performed at room temperature, thermal deformation does not occur. In addition, since no adhesive is used, productivity can be improved.

Traditionally, crimping work has been performed manually by a worker; however, in recent years, the number of locations where nuts or bolts are attached to one metal panel has been increasing. Due to a demand for improved productivity caused by this increase, automation of crimping is required.

Conventionally, a pierce nut driving device has been known as an automatic crimping device (for example, refer to Patent Document 1 (FIG. 1)).

According to the technology described in Patent Document 1, a pierce nut supplied via a hose is driven into a metal panel by a punch, and crimping is automatically performed by this driving, which is an advantage.

However, in the technology described in Patent Document 1, one pierce nut driving device can process only one type of nut. When there are a plurality of types of nuts with different sizes, a plurality of the devices need to be prepared.

### [Metal panel]

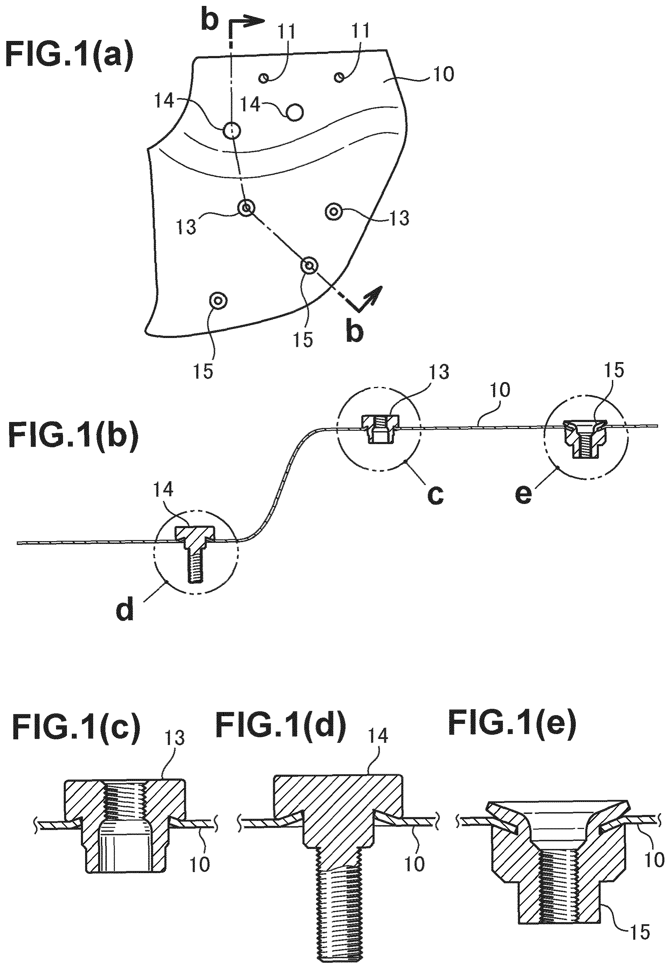

FIG. 1(a) illustrates one example of a metal panel 10 used in a vehicle. The metal panel 10 is configured such that iron nut or bolts are crimped to an aluminum alloy panel. Incidentally, the metal panel 10 may be a steel panel or a magnesium alloy panel, and the type of metal is not limited.

As illustrated in FIG. 1(a), two positioning holes 11 are formed in the metal panel 10, and two nuts 13, two bolts 14, and two special nuts 15 are crimped to the metal panel 10. The special nut 15 is a nut having a more complicated crimping form than the nut 13.

FIG. 1(b) is a cross-sectional view taken along line b-b in FIG. 1(a). In addition, FIG. 1(c) is an enlarged view of portion c in FIG. 1(b), FIG. 1(d) is an enlarged view of portion d in FIG. 1(b), and FIG. 1(e) is an enlarged view of portion e in FIG. 1(b).

The nuts 13 are crimped to the metal panel 10 as illustrated in FIG. 1(c), the bolts 14 are crimped to the metal panel 10 as illustrated in FIG. 1(d), and the special nuts 15 are crimped to the metal panel 10 as illustrated in FIG. 1(e).

In recent years, demand for such metal panel 10 has been increasing amid a shift in vehicle body configuration from using only conventional steel panels to a combination of steel panels and aluminum alloy panels for the purpose of reducing the weight of a vehicle body. When a crimping device is prepared for each type of nut or bolt, the procurement costs for the crimping devices increase. However, an increase in cost is not preferred.

Amid a demand for cost reduction, a technology capable of suppressing the procurement costs of crimping devices even as the number of types of nuts and bolts increases is required.

### CITATION LIST

### PATENT DOCUMENT

Patent Document 1: Japanese Unexamined Patent Publication No. H6-320354

### DISCLOSURE OF THE INVENTION

### PROBLEM TO BE SOLVED BY THE INVENTION

An object of the invention is to provide a technology capable of automatically crimping a plurality of types and quantities of nuts and bolts to a metal panel using one crimping device.

### MEANS FOR SOLVING PROBLEM

The invention according to a first aspect is a crimping device that crimps one of a nut and a bolt to a metal panel, including: a stroke displacement gauge that measures a stroke when crimping is performed; a pressing force gauge that measures a pressing force when crimping is performed; and a control unit that determines whether a crimping result is a pass, based on stroke information from the stroke displacement gauge and pressing force information from the pressing force gauge. The control unit includes at least one of a first pass determination criterion for the nut and a second pass determination criterion for the bolt.

The invention according to a second aspect is the crimping device according to the first aspect, further including: a variable hydraulic control device that changes hydraulic pressure such that the pressing force measured by the pressing force gauge becomes a set pressing force set in advance.

The invention according to a third aspect is the crimping device according to the first aspect, further including: a post rising from a base of a press machine; a lower holder removably attached to the post and holding a lower crimping die; a pressing shaft suspended from a frame of the press machine; and an upper holder removably attached to the pressing shaft and holding an upper crimping die.

The invention according to a fourth aspect is the crimping device according to the third aspect, further including: a positioning pin that penetrates through the lower crimping die and that is lifted and lowered; and a parts feeder that guides one of the nut and the bolt to the positioning pin and that places one of the nut and the bolt on the positioning pin.

The invention according to a fifth aspect is the crimping device according to the fourth aspect, further including: a lower stroke displacement gauge that measures a lifting and lowering stroke of the positioning pin. The control unit determines that one of the nut and the bolt is placed on the positioning pin in a correct posture, based on stroke information from the lower stroke displacement gauge.

The invention according to a sixth aspect is the crimping device according to the fifth aspect, in which the first pass determination criterion and the second pass determination criterion are established based on the stroke information from the lower stroke displacement gauge when the positioning pin is brought into contact with the upper crimping die.

The invention according to a seventh aspect is the crimping device according to the third aspect, further including: a camera that identifies a shape of one of the nut and the bolt placed between the lower crimping die and the upper crimping die. The control unit determines whether a posture of one of the nut and the bolt is correct, based on image information of the camera.

The invention according to an eighth aspect is the crimping device according to the sixth aspect, in which the positioning pin has a flat surface at a tip.

The invention according to a ninth aspect is a cell production facility including a plurality of the crimping devices according to the first aspect, including: an entrance for carrying in the metal panel; a multi-axis robot that transports the metal panel; a first crimping device to which a first lower crimping die and a first lower holder corresponding to the nut are attached; a second crimping device to which a second lower crimping die and a second lower holder corresponding to the bolt are attached; and an exit for carrying out the metal panel to which the nut and the bolt are crimped. The entrance, the first crimping device, the second crimping device, the exit are arranged within a turning range of the multi-axis robot and on the same circumference.

The invention according to a tenth aspect is the cell production facility according to the ninth aspect, in which the metal panel includes a first metal panel and a second metal panel that have different forms. A first gripper that grips the first metal panel and a second gripper that grips the second metal panel are placed in the cell production facility. The cell production facility includes an automatic tool changer that selects and attaches the first gripper and the second gripper to the multi-axis robot.

The invention according to an eleventh aspect is the cell production facility according to the tenth aspect, in which the first metal panel is composed of a left metal panel and a right metal panel that have different forms. The first gripper includes a left gripping portion that grips the left metal panel, and a right gripping portion that grips the right metal panel, and each of the left gripping portion and the right gripping portion includes a positioning pin.

The invention according to a twelfth aspect is the cell production facility according to the ninth aspect, in which the exit is provided adjacent to the entrance.

The invention according to a thirteenth aspect is the cell production facility according to the ninth aspect, in which the cell production facility is surrounded by a safety fence. The cell production facility includes a first parts feeder that guides the nut to the first crimping device, and the first parts feeder includes a first parts supply portion that is disposed outside the safety fence and that supplies the nuts one by one, and a first pipe that guides the nut supplied by the first parts supply portion to the first crimping device via air conveyance. The cell production facility includes a second parts feeder that guides the bolt to the second crimping device, and the second parts feeder includes a second parts supply portion that is disposed outside the safety fence and that supplies the bolts one by one, and a second pipe that guides the bolt supplied by the second parts supply portion to the second crimping device via air conveyance.

The invention according to a fourteenth aspect is a composite cell production facility including a plurality of the cell production facilities according to the ninth aspect, including: a first cell production facility; and a second cell production facility. The first cell production facility and the second cell production facility are connected by a common conveying path.

### EFFECT OF THE INVENTION

In the invention according to the first aspect, the stroke displacement gauge and the pressing force gauge are added to a general-purpose press machine, and the control unit performs crimping pass/fail determination based on the stroke and the pressing force when crimping is performed. Since the control unit includes the first pass determination criterion for the nut or the second pass determination criterion for the bolt, visual pass/fail determination by a worker becomes unnecessary, and crimping can be automatically performed. Furthermore, a wide variety of nuts or bolts can be crimped to the metal plate using one crimping device.

As described above, a technology capable of automatically crimping a plurality of types and quantities of nuts and bolts to a metal panel using one crimping device is provided.

Namely, the invention provides a technology capable of automatically conveying nuts and bolts, setting the nuts and the bolts on a metal panel, and crimping the nuts and the bolts thereto using one crimping device.

In the invention according to the second aspect, the set pressing force can be easily changed by the variable hydraulic control device. Namely, an inexpensive general-purpose press machine exerts a constant pressing force. Even when the pressing force of the press machine cannot be changed in such a manner, the set pressing force can be changed by the variable hydraulic control device. As a result, facility costs can be reduced.

In the invention according to the third aspect, depending on the type of nut and bolt, the lower crimping die can be attached to and detached from the post together with the lower holder, and the upper crimping die can be attached to and detached from the pressing shaft together with the lower holder. As a result, only minor improvements to a general-purpose press machine are required, and facility costs can be reduced.

In the invention according to the fourth aspect, the parts feeder places the nut or bolt on the positioning pin.

If the parts feeder is attached to the upper crimping die (or the lower crimping die), the structure of the upper crimping die (or the lower crimping die) becomes complicated.

In this regard, in the invention, since the parts feeder is not attached to the upper crimping die (or the lower crimping die), the structure of the upper crimping die (or the lower crimping die) becomes simplified. As a result, automation and the use of a general-purpose press machine is further encouraged.

In the invention according to the fifth aspect, the control unit determines whether the posture of the nut or bolt is correct, based on the stroke information of the lower stroke displacement gauge.

Monitoring the posture of the nut or bolt using a camera can be considered; however, according to the invention, if the posture of the nut or bolt is monitored using the lower stroke displacement gauge, determination by the camera can be eliminated or made unnecessary.

In the invention according to the sixth aspect, a refence for height is established by bringing the positioning pin into contact with the upper crimping die.

In this case, when the upper crimping die or the lower crimping die is mistakenly set or is mistakenly replaced with another die, the error can be detected due to the contact of the positioning pin with the upper crimping die or the lower crimping die.

In the invention according to the seventh aspect, the control unit determines whether the posture of the nut or bolt is correct, based on the image information of the camera.

In the fifth aspect, it is determined whether the posture of the nut or bolt is correct, based on the stroke information of the lower stroke displacement gauge; however, depending on the shape of the nut or bolt, it may not be able to make the determination. Even in this case, the camera can be used to determine whether the posture of the nut or bolt is correct, and stable crimping work can be maintained.

In the invention according to the eighth aspect, since the tip of the positioning pin is a flat surface, even if the positioning pin is repeatedly brought into contact with the upper crimping die, damage to the positioning pin and the upper crimping die can be prevented.

In the invention according to the ninth aspect, in the cell production facility including the plurality of crimping devices, since the exit, the first crimping device, the second crimping device, and the entrance are arranged within the turning range of the multi-axis robot and on the same circumference, a more compact cell production facility is provided. In addition, the metal panel is conveyed over the shortest distance, so that productivity is improved.

In the invention according to the tenth aspect, the multi-axis robot includes the automatic tool changer, and can select and attach the first gripper that grips the first metal panel and the second gripper that grips the second metal panel to the multi-axis robot. Crimping can be performed on a plurality of types of metal panels.

In the invention according to the eleventh aspect, the first gripper includes the left gripping portion that grips the left metal panel, and the right gripping portion that grips the right metal panel, and each of the left gripping portion and the right gripping portion includes the positioning pin.

By rotating a robot hand, crimping can be efficiently performed on a left-right symmetrical vehicle body panel such as that of an automobile, so that productivity can be improved.

In the invention according to the twelfth aspect, the exit for carrying out the metal panel is provided adjacent to the entrance for carrying in the metal panel. Since the entrance and the exit are adjacent to each other, one robot (or one worker) can handle the supply and carrying out of the metal panel.

In the invention according to the thirteenth aspect, the cell production facility is surrounded by the safety fence, and the first and second parts supply portions are disposed outside the safety fence. Outside the safety fence, the nuts can be replenished to the first parts supply portion, and the bolts can be replenished to the second parts supply portion. Since work is performed outside the safety fence, the nuts or bolts can be replenished easily and at any time.

In the invention according to the fourteenth aspect, the composite cell production facility is composed of the first cell production facility and the second cell production facility, and the first cell production facility and the second cell production facility are connected by the common conveying path. The types and quantities of nuts or bolts can be doubled by using the composite cell production facility.

### BRIEF DESCRIPTION OF DRAWINGS

FIG. 1(a) is a plan view of a metal panel, FIG. 1(b) is a cross-sectional view taken along line b-b in FIG. 1(a), FIG. 1(c) is an enlarged view of portion c in FIG. 1(b), FIG. 1(d) is an enlarged view of portion d in FIG. 1(b), and FIG. 1(e) is an enlarged view of portion e in FIG. 1(b);
FIG. 2 is a side view of a crimping device according to the invention;
FIG. 3(a) and FIG. 3(b) are views describing a configuration and operation of a first lower crimping die, a first upper crimping die, and a first positioning pin;
FIG. 4(a) is a view describing the operation of the first lower crimping die, the first upper crimping die, and the first positioning pin, FIG. 4(b) is a view describing a comparative example, and FIG. 4(c) is a view describing the correlation between pressing force and stroke;
FIG. 5(a) and FIG. 5(b) are views describing a configuration and operation of a second lower crimping die, a second upper crimping die, and a second positioning pin;
FIG. 6(a) is a view describing the operation of the second lower crimping die, the second upper crimping die, and the second positioning pin, FIG. 6(b) is a view describing a comparative example, FIG. 6(c) is a view describing the correlation between pressing force and stroke, and FIG. 6(d) is a view describing a comparative example;
FIG. 7(a) and FIG. 7(b) are views describing a configuration and operation of a third lower crimping die, a third upper crimping die, and a third positioning pin;
FIG. 8(a) is a view describing the operation of the third lower crimping die, the third upper crimping die, and the third positioning pin, FIG. 8(b) is a view describing a comparative example, and FIG. 8(c) is a view describing the correlation between pressing force and stroke;
FIG. 9 is a graph describing a first pass determination criterion to a third pass determination criterion;
FIG. 10 is a plan view of a cell production facility according to the invention;
FIG. 11(a) is a plan view of first to third grippers, FIG. 11(b) is a cross-sectional view taken along line b-b in FIG. 11(a), FIG. 11(c) is a view taken along arrow c-c in FIG. 11(a), and FIG. 11(d) is a view taken along arrow d-d in FIG. 11(a);
FIG. 12(a) is a plan view of first to third parts feeders, FIG. 12(b) is a cross-sectional view taken along line b-b in FIG. 12(a), and FIG. 12(c) is a view describing the operation; and
FIG. 13 is a plan view of a composite cell production facility according to the invention.

### BEST MODE FOR CARRYING OUT THE INVENTION

Hereinafter, a preferred embodiment of the invention will be described with reference to the accompanying drawings.

### [Embodiment]

### [Crimping device]

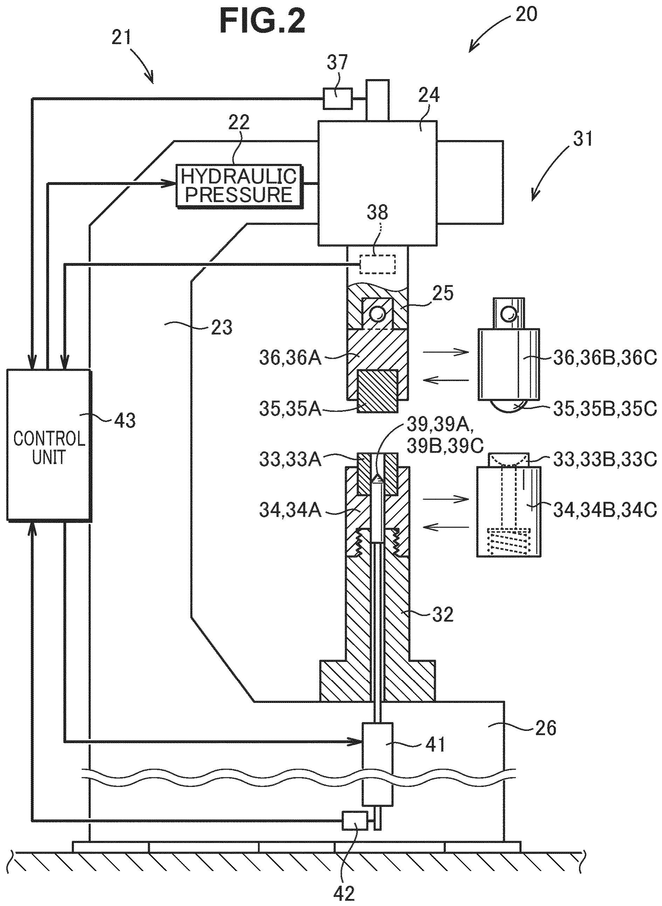

As illustrated in FIG. 2, a crimping device 20 is configured by equipping a general-purpose press machine 21 with equipment 31 for the invention.

The press machine 21 is configured by adding a variable hydraulic control device 22 to a hydraulic press machine that applies a constant pressing force. The hydraulic press machine includes a hydraulic cylinder 24 on an upper portion of a frame 23 having a C-shape. A piston rod of the hydraulic cylinder 24 serves as a pressing shaft 25.

The equipment 31 is composed of the variable hydraulic control device 22, a post 32 rising from a base 26 of the press machine 21, a lower holder 34 removably attached to the post 32 and holding a lower crimping die 33, an upper holder 36 removably attached to the pressing shaft 25 and holding an upper crimping die 35, an upper stroke displacement gauge 37 serving as a stroke displacement gauge that measures the lifting and lowering stroke of the upper holder 36, a pressing force gauge 38 that measures an upward pressing force applied to the upper crimping die 35, a positioning pin 39 that penetrates through the lower crimping die 33 and that is lifted and lowered, a pin lifting cylinder 41 that lifts and lowers the positioning pin 39, a lower stroke displacement gauge 42 that measures the lifting and lowering stroke of the positioning pin 39, and a control unit 43 that performs various controls.

The lower holder 34 is removably screw-coupled to the post 32. In addition, the upper holder 36 is removably coupled to the pressing shaft 25 by a pin.

The pressing force gauge 38 is preferably a load cell that electrically measures strain and converts the strain into force.

In the following description, when there are a plurality of types of the lower crimping dies 33, the first is referred to as a first lower crimping die 33A with the letter A appended, the second is referred to as a second lower crimping die 33B with the letter B appended, and the third is referred to as a third lower crimping die 33C with the letter C appended. The same applies to the lower holder 34, the upper crimping die 35, the upper holder 36, and the positioning pin 39.

Namely, the first lower crimping die 33A, the second lower crimping die 33B, and the third lower crimping die 33C are replaceably attached to one post 32 via first to third lower holders 34A to 34C.

Similarly, a first upper crimping die 35A, a second upper crimping die 35B, and a third upper crimping die 35C are replaceably attached to one pressing shaft 25 via first to third upper holders 36A to 36C.

In addition, a first positioning pin 39A, a second positioning pin 39B, and a third positioning pin 39C are replaceable. Since the above-mentioned components are replaceable, there is no problem with continued use without replacement.

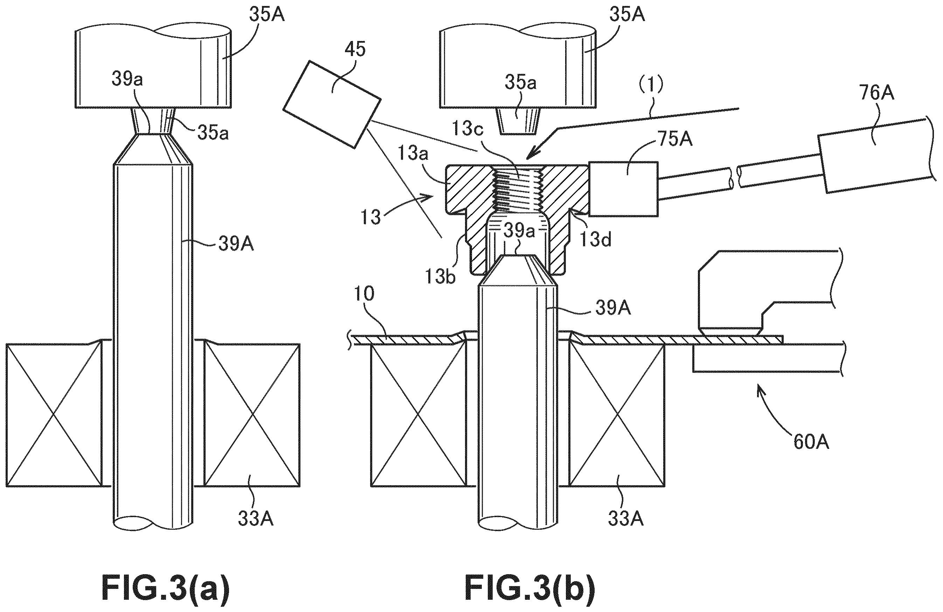

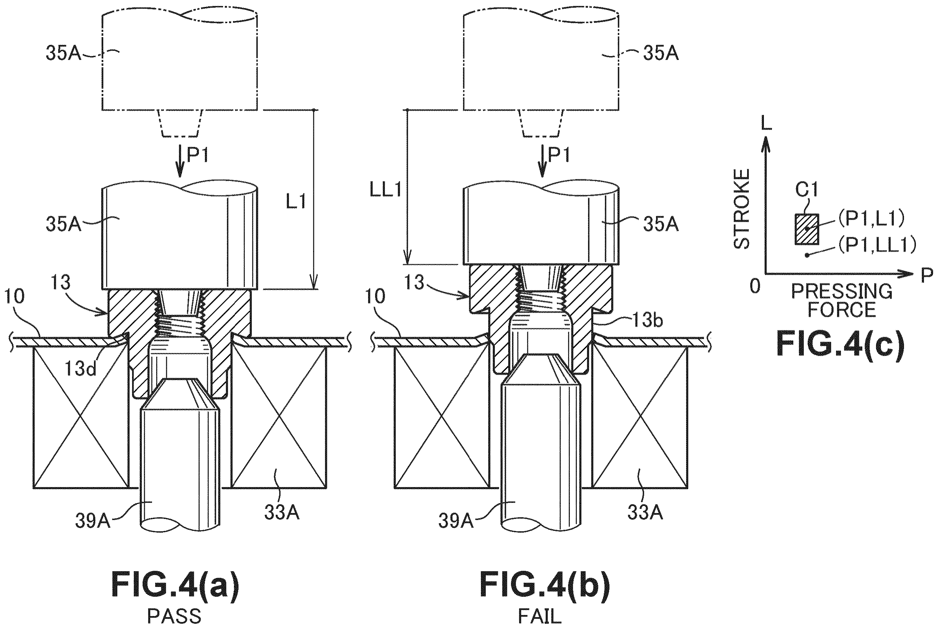

Next, the crimping of the nut 13 described with reference to FIG. 1(c) will be described in detail with reference to FIG. 3 and FIG. 4.

As illustrated in FIG. 3(a), replacement is made with the first lower crimping die 33A, the first upper crimping die 35A, and the first positioning pin 39A.

In this case, at least immediately after the replacement, the first positioning pin 39A is raised and brought into contact with the first upper crimping die 35A. The following two effects are obtained by this contact.

First, when the first upper crimping die 35A is misaligned after replacement or replacement is made with another incorrect die, the height position of the first positioning pin 39A differs from an expected height position. Due to the difference, the control unit (FIG. 2, reference numeral 43) issues an alarm indicating that the first upper crimping die 35A is incorrect. Therefore, a set error can be automatically detected.

Second, the contact position can be used as a reference for the lifting and lowering stroke of the first upper crimping die 35A and the first positioning pin 39A.

After this contact, the first positioning pin 39A can also be lowered to a predetermined height.

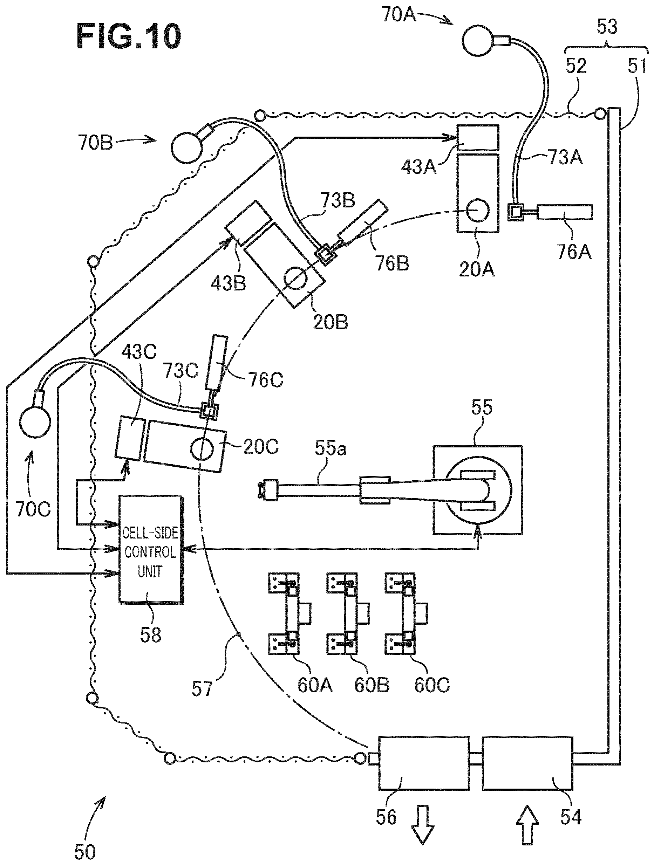

Then, as illustrated in FIG. 3(b), the metal panel 10 is placed on the first lower crimping die 33A by a first gripper 60A attached to a robot hand (FIG. 10, reference numeral 55a). Next, the nut 13 is moved as indicated by arrow (1) by a magnetic head 75A, and is placed on the first positioning pin 39A.

The magnetic head 75A may be one of a permanent magnet and an electromagnet. In the case of an electromagnet, the electromagnet is demagnetized when the nut 13 reaches above the first positioning pin 39A.

Incidentally, it is desirable that the tip of the first positioning pin 39A is a flat surface 39a. When the tip is the flat surface 39a, the first upper crimping die 35A is not damaged even if the flat surface 39a repeatedly comes into contact with the first upper crimping die 35A. The same applies to the second positioning pin 39B and the third positioning pin 39C.

### [Nut]

As illustrated in FIG. 3(b), the nut 13 is composed of a head portion 13a and a neck portion 13b having a smaller diameter than the head portion 13a and extending downward from the head portion 13a. A female thread 13c is formed in the head portion 13a. A V-shaped portion 13d is provided at the boundary between the head portion 13a and the neck portion 13b.

### [Camera]

An image of the nut 13 can be captured by a camera 45. The control unit (FIG. 2, reference numeral 43) stores image information of a correct posture, and compares the stored image information with the captured image information. For example, when the neck portion 13b is on top and the head portion 13a is on the bottom, the control unit determines that the posture of the nut 13 is incorrect. Particularly, the camera 45 is useful in the case of the special nut 15 in which a thin-walled tubular portion 15c and a small-diameter portion 15b above and below a large-diameter portion 15a are symmetrical in shape and size.

### [Crimping of nut]

In FIG. 3(b), when the first upper crimping die 35A is lowered, a projection 35a of the first upper crimping die 35A fits into the female thread 13c. Thereafter, the nut 13 and the first positioning pin 39A are lowered by the first upper crimping die 35A.

As illustrated in FIG. 4(a), a part (a peripheral edge of a hole) of the metal panel 10 bites into the V-shaped portion 13d. When the biting is sufficient, the nut 13 is crimped to the metal panel 10. Namely, the crimping result is determined as a pass.

At this time, the lowering stroke and the pressing force of the first upper crimping die 35A are denoted by L1 and P1, respectively. The pressing force P1 also serves as a set pressing force set in advance.

### [Poor crimping]

As illustrated in FIG. 4(b), even though the pressing force is at the set pressing force P1, the nut 13 penetrates through the metal panel 10 only partway along the neck portion 13b due to misalignment, inclined posture, or the like with respect to the hole. In this case, the crimping result is determined as a fail.

At this time, the lowering stroke of the upper crimping die 35 is denoted by LL1.

### [First pass determination criterion]

As illustrated in FIG. 4(c), a graph with a pressing force P on the horizontal axis and a stroke L on the vertical axis is assumed. In FIG. 4(a), the results of crimping performed while changing the pressing force are recorded. The correlation between the pressing force P and the stroke L is obtained from items with passing crimping results. A first pass area C1 is established based on the correlation. Coordinates (P1, L1) are located within the first pass area C1, and coordinates (P1, LL1) are located outside the first pass area C1. The first pass area C1 is referred to as a first pass determination criterion for the nut.

The control unit determines the crimping result as a pass when the stroke and the pressing force are within the first pass area C1, and determines the crimping result as a fail when the stroke and the pressing force are outside the first pass area C1. Then, the result of determining pass/fail of the crimping based on the first pass determination criterion for nut is stored, recorded and displayed, and in the case of a fail, production is stopped. Maintenance or the like can be performed due to the stoppage.

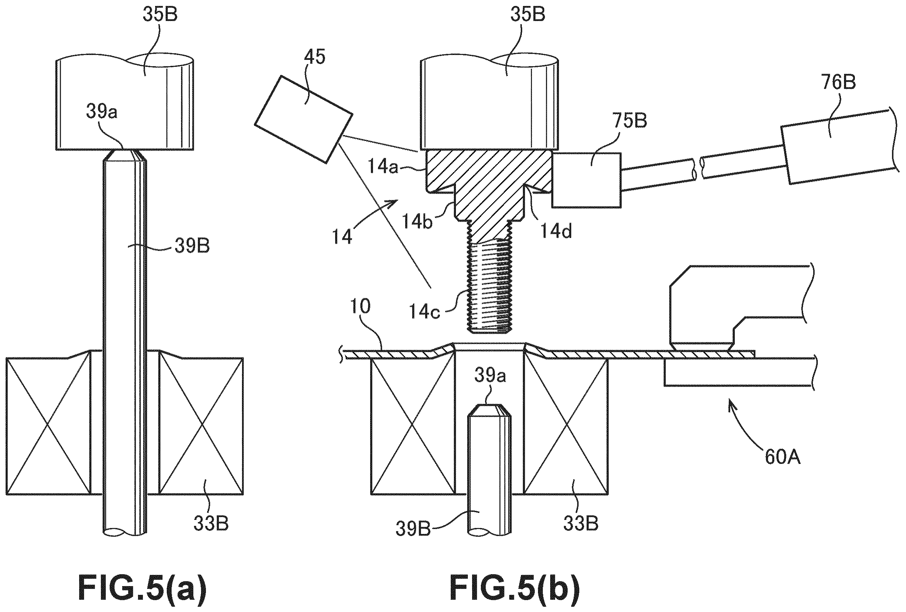

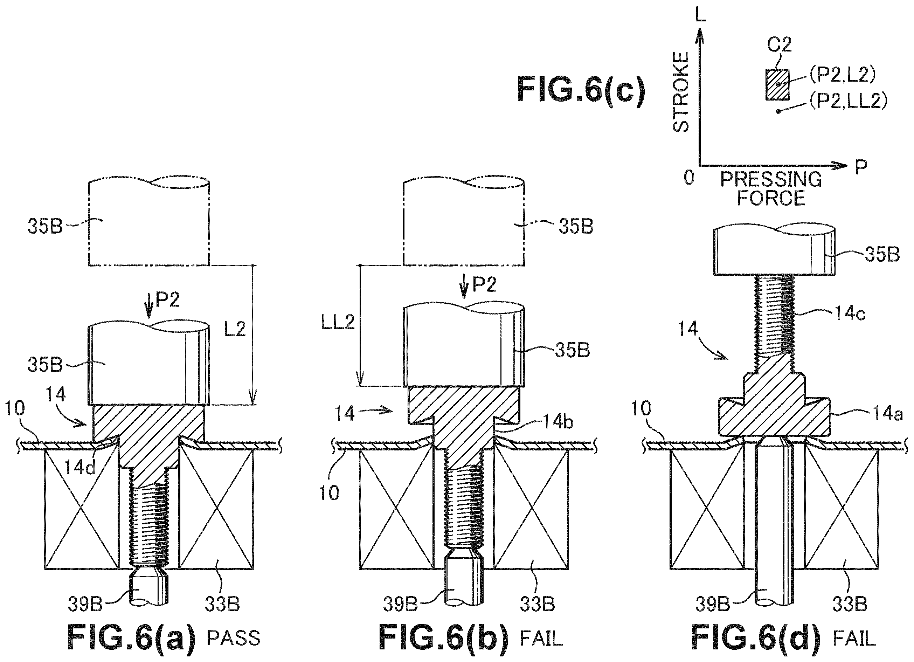

Next, the crimping of the bolt 14 described with reference to FIG. 1(d) will be described in detail with reference to FIG. 5 and FIG. 6.

As illustrated in FIG. 5(a), when replacement is made with the second lower crimping die 33B, the second upper crimping die 35B, and, if necessary, the second positioning pin 39B, at least immediately after the replacement, the first positioning pin 39A or the second positioning pin 39B is raised and brought into contact with the second upper crimping die 35B. This contact allows confirmation that the second upper crimping die 35B is a correct die, and the contact position can be used as a reference for the lifting and lowering stroke of the second upper crimping die 35B and the second positioning pin 39B.

After this contact, the second positioning pin 39B can be lowered to a predetermined height.

Then, as illustrated in FIG. 5(b), the metal panel 10 is placed on the second lower crimping die 33B by the first gripper 60A.

Next, the bolt 14 is brought into contact with the bottom of the second upper crimping die 35B by a second magnetic hand 75B and a second cylinder unit 76B. At least the bottom portion of the second upper crimping die 35B is magnetized, and attracts the bolt 14.

### [Bolt]

The bolt 14 is composed of a head portion 14a, a neck portion 14b having a smaller diameter than the head portion 14a and extending downward from the head portion 14a, and a male thread portion 14c extending downward from the neck portion 14b. Furthermore, a V-shaped portion 14d is provided at the boundary between the head portion 14a and the neck portion 14b.

### [Camera]

An image of the bolt 14 can be captured by the camera 45. The control unit (FIG. 2, reference numeral 43) stores image information of a correct posture, compares the stored image information with the captured image information, and determines that the posture of the bolt 14 is incorrect, for example, when the neck portion 14b is on top and the head portion 14a is on the bottom.

### [Crimping of bolt]

As illustrated in FIG. 6(a), a part (a peripheral edge of a hole) of the metal panel 10 bites into the V-shaped portion 14d. When the biting is sufficient, the bolt 14 is crimped to the metal panel 10. Namely, the crimping result is determined as a pass.

At this time, the lowering stroke and the pressing force of the second upper crimping die 35B are denoted by L2 and P2, respectively. The pressing force P2 also serves as a set pressing force set in advance.

### [Poor crimping]

As illustrated in FIG. 6(b), even though the pressing force is at the set pressing force P2, the bolt 14 penetrates through the metal panel 10 only partway along the neck portion 14b due to misalignment, inclined posture, or the like with respect to the hole. In this case, the crimping result is determined as a fail.

At this time, the lowering stroke of the upper crimping die 35 is denoted by LL2.

### [Second pass determination criterion]

Following the same procedure as for the first pass determination criterion, a second pass area C2 for a second pass determination criterion is set as illustrated in FIG. 6(c).

In the crimping of the bolt 14, the control unit determines the crimping result as a pass when the stroke and the pressing force are within the second pass area C2, and determines the crimping result as a fail when the stroke and the pressing force are outside the second pass area C2. Furthermore, the determination result is the same as for the first pass determination criterion.

### [Poor posture of bolt]

The poor posture of the bolt 14 can be detected not only by the camera 45 illustrated in FIG. 5(b) but also by the position of the second positioning pin 39B.

Namely, as illustrated in FIG. 6(d), when the head portion 14a of the bolt 14 is on the bottom, the second upper crimping die 35B or the second positioning pin 39B cannot be lowered to the predetermined height (FIG. 6(a), refer to reference numeral 39B). As a result, the poor posture of the bolt 14 can be detected. In the case of the bolt 14, the camera can be omitted.

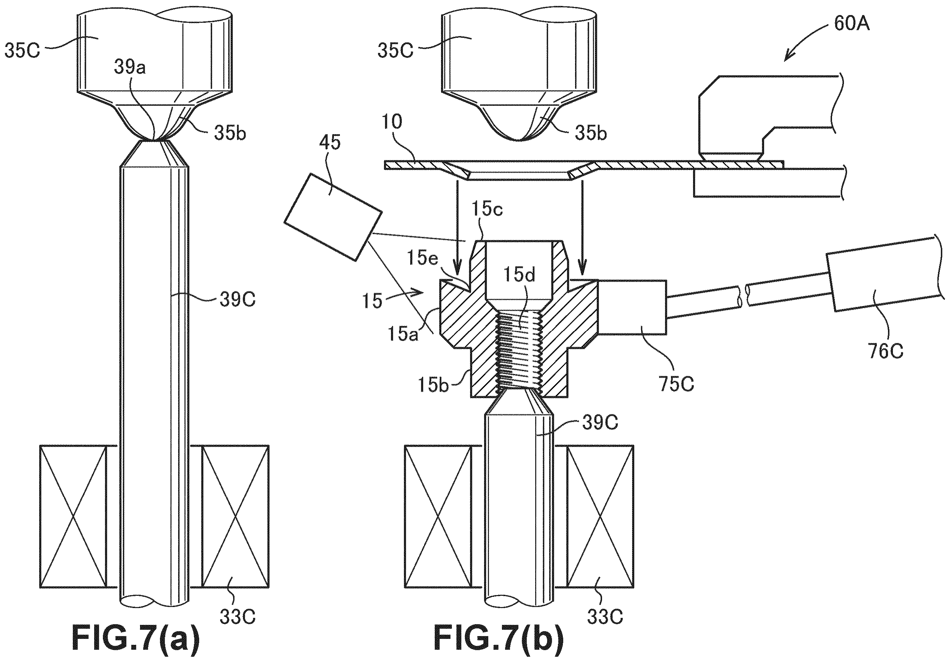

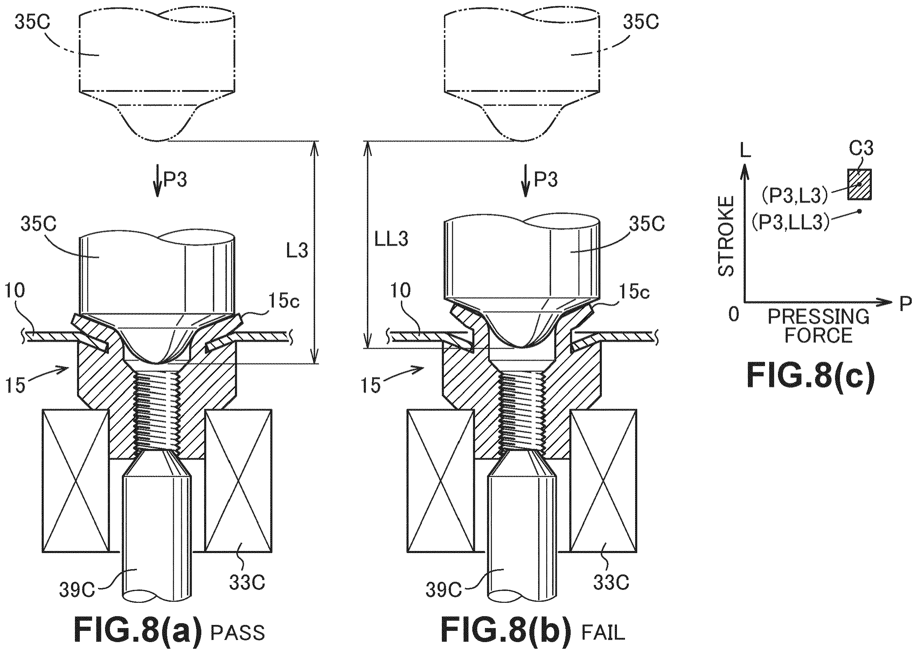

Next, the crimping of the special nut 15 described with reference to FIG. 1(e) will be described in detail with reference to FIG. 7 and FIG. 8.

As illustrated in FIG. 7(a), when replacement is made with the third lower crimping die 33C, the third upper crimping die 35C, and, if necessary, the third positioning pin 39C, at least immediately after the replacement, the third positioning pin 39C is raised and brought into contact with the third upper crimping die 35C. This contact allows confirmation that the third upper crimping die 35C is a correct die and is located at a correct position, and the contact position can be used as a reference for the lifting and lowering stroke of the third upper crimping die 35C and the third positioning pin 39C.

After this contact, the third positioning pin 39C can be lowered to a predetermined height.

Then, as illustrated in FIG. 7(b), the special nut 15 is placed on the third positioning pin 39C. Subsequently, the metal panel 10 is placed on the special nut 15.

### [Special nut]

The special nut 15 is composed of the large-diameter portion 15a, the small-diameter portion 15b extending from the large-diameter portion 15a to one side (in this example, extending downward), and the thin-walled tubular portion 15c extending from the large-diameter portion 15a to the other side. The small-diameter portion 15b is provided with a female thread portion 15d. A V-shaped portion 15e is provided at the boundary between the large-diameter portion 15a and the thin-walled tubular portion 15c.

### [Crimping of special nut]

In FIG. 7(b), the third upper crimping die 35C is lowered in a state in which the metal panel 10 is placed on the special nut 15. A cone portion 35b of the third upper crimping die 35C fits into the thin-walled tubular portion 15c.

When the third upper crimping die 35C is lowered, the large-diameter portion 15a is placed on the third lower crimping die 33C. From the moment the large-diameter portion 15a is placed on the third lower crimping die 33C, the cone portion 35b starts to expand the thin-walled tubular portion 15c.

As a result, as illustrated in FIG. 8(a), the thin-walled tubular portion 15c covers the metal panel 10. In this state, the crimping result is determined as a pass.

At this time, the lowering stroke and the pressing force of the third upper crimping die 35C are denoted by L3 and P3, respectively. The pressing force P3 also serves as a set pressing force set in advance.

### [Poor crimping]

As illustrated in FIG. 8(b), even though the pressing force is at the set pressing force P3, the plastic deformation of the thin-walled tubular portion 15c of the special nut 15 is incomplete. In this case, the crimping result is determined as a fail.

At this time, the lowering stroke of the upper crimping die 35 is denoted by LL3.

### [Third pass determination criterion]

Following the same procedure as for the first pass determination criterion, a third pass area C3 for a third pass determination criterion is set as illustrated in FIG. 8(c).

In the crimping of the special nut 15, the control unit determines the crimping result as a pass when the stroke and the pressing force are within the third pass area C3, and determines the crimping result as a fail when the stroke and the pressing force are outside the third pass area C3. Furthermore, the determination result is the same as for the first pass determination criterion.

### [Pass/fail determination for crimping of nut or bolt]

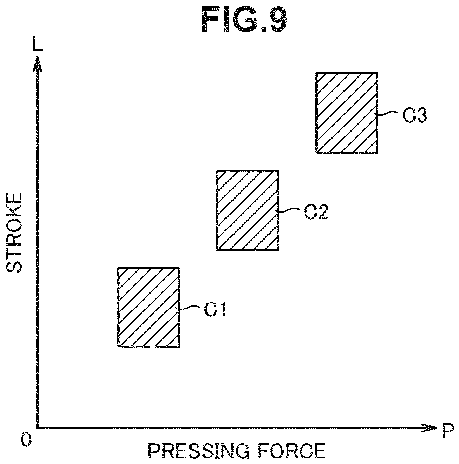

FIG. 9 illustrates one example of a map (graph) for pass/fail determination.

In this map (graph), the first pass area C1 for the first pass determination criterion, the second pass area C2 for the second pass determination criterion, and the third pass area C3 for the third pass determination criterion are illustrated.

The control unit 43 illustrated in FIG. 2 stores the map (graph), selects the first pass area C1 when the nut (FIG. 3(b), reference numeral 13) is crimped, determines the crimping result as a "pass" when the pressing force obtained by the pressing force gauge 38 and the stroke obtained by the upper stroke displacement gauge 37 are within the first pass area C1, and determines the crimping result as a "fail" when the pressing force and the stroke are outside the first pass area C1.

Similarly, the control unit 43 performs the determination to be described below.

The second pass area C2 is selected when the bolt (FIG. 5(b), reference numeral 14) is crimped, the crimping result is determined as a "pass" when the pressing force obtained by the pressing force gauge 38 and the stroke obtained by the upper stroke displacement gauge 37 are within the second pass area C2, and the crimping result is determined as a "fail" when the pressing force and the stroke are outside the second pass area C2.

The third pass area C3 is selected when the special nut (FIG. 7(b), reference numeral 15) is crimped, the crimping result is determined as a "pass" when the pressing force obtained by the pressing force gauge 38 and the stroke obtained by the upper stroke displacement gauge 37 are within the third pass area C3, and the crimping result is determined as a "fail" when the pressing force and the stroke are outside the third pass area C3.

The crimping device 20 described above can be summarized as follows.

The crimping device 20 that crimps one of the nut 13 and the bolt 14 to the metal panel 10 includes, as illustrated in FIG. 2, the upper stroke displacement gauge 37 that measures a stroke when crimping is performed; the pressing force gauge 38 that measures a pressing force when crimping is performed; and the control unit 43 that determines whether a crimping result is a pass, based on stroke information from the stroke displacement gauge 37 and pressing force information from the pressing force gauge 38. The control unit 43 includes, as illustrated in FIG. 9, at least one of the first pass determination criterion (the first pass area C1) for the nut and the second pass determination criterion (the second pass area C2) for the bolt.

Furthermore, as illustrated in FIG. 4(a), the nut 13 can be crimped by the first lower crimping die 33A and the first upper crimping die 35A.

In FIG. 2, the first lower crimping die 33A and the first upper crimping die 35A are replaced with the second lower crimping die 33B and the second upper crimping die 35B.

Then, as illustrated in FIG. 6(a), the bolt 14 can be crimped by the second lower crimping die 33B and the second upper crimping die 35B.

Namely, according to the invention, a technology capable of crimping both a nut and a bolt using one crimping device 20 is provided, which is an advantage.

Preferably, as illustrated in FIG. 2, the crimping device 20 further includes the variable hydraulic control device 22 that changes hydraulic pressure such that the pressing force measured by the pressing force gauge 38 becomes a set pressing force (for example, P1 illustrated in FIG. 4(c)) set in advance.

The set pressing force can be easily set by the variable hydraulic control device 22, which is an advantage.

Preferably, as illustrated in FIG. 2, the crimping device 20 further includes the post 32 rising from the base 26 of the press machine 21; the lower holder 34 removably attached to the post 32 and holding the lower crimping die 33; the pressing shaft 25 suspended from the frame 23 of the press machine 21; and the upper holder 36 removably attached to the pressing shaft 25 and holding the upper crimping die 35.

Depending on the type of nut and bolt, the lower crimping die 33 can be attached to and detached from the post 32 together with the lower holder 34, and the upper crimping die 35 can be attached to and detached from the pressing shaft 25 together with the lower holder 36. As a result, an advantage of encouraging the use of the general-purpose press machine 21 is obtained.

Preferably, the crimping device 20 further includes the positioning pin 39 that penetrates through the lower crimping die 33 and that is lifted and lowered; and, as illustrated in FIG. 3(b), a parts feeder that guides one of the nut 13 and the bolt to the positioning pin 39 and that places one of the nut 13 and the bolt on the positioning pin 39. The parts feeder is composed of the first magnetic head 75A, a first cylinder unit 76A, and the like.

The structure of the upper crimping die 35A (or the lower crimping die 33A) becomes simplified. As a result, an advantage of further encouraging the use of the general-purpose press machine 21 is obtained.

Preferably, as illustrated in FIG. 2, the crimping device 20 further includes the lower stroke displacement gauge 42 that measures a lifting and lowering stroke of the positioning pin 39. The control unit 43 determines that one of the nut and the bolt is placed on the positioning pin 39 in a correct posture, based on stroke information from the lower stroke displacement gauge 42.

The lower stroke displacement gauge can be used to determine whether the posture of the nut or bolt is correct.

Preferably, as illustrated in FIG. 3(a), the positioning pin (the first positioning pin 39A) is brought into contact with the upper crimping die (the first upper crimping die 35A). The stroke information is obtained by the lower stroke displacement gauge (FIG. 2, reference numeral 42). The first pass determination criterion or the second pass determination criterion as illustrated in FIG. 9 are established based on the stroke information.

When the upper crimping die is mistakenly replaced with another die, the error can be detected since the contact of the positioning pin with the upper crimping die makes the detection height to differ from a predetermined value, which is an advantage.

Preferably, as illustrated in FIG. 3(b), the shape of the nut or bolt between the lower crimping die (the first lower crimping die 33A) and the upper crimping die (the first upper crimping die 35A) is identified by the camera 45.

Since it is determined whether the posture of the nut or bolt is correct, stable crimping work can be maintained, which is an advantage.

Preferably, as illustrated in FIG. 3(a), the tip of the positioning pin (the first positioning pin 39A) is the flat surface 39a.

Even if the positioning pin is repeatedly brought into contact with the upper crimping die, damage to the positioning pin and the upper crimping die can be prevented, which is an advantage.

In the above description, the nut 13, the bolt 14, and the special nut 15 can be crimped using one crimping device 20 illustrated in FIG. 2.

However, there is no problem with using a plurality of the crimping devices 20 to improve productivity Specific examples will be described below.

### [Difference between cell production and line production]

A line production facility in which a large number of press machines or multi-axis robots are disposed alongside a long conveyor are suitable for low-mix, high-volume production; however, facility costs are high and it is difficult to change the facility.

Meanwhile, a cell production facility in which a press machine or a multi-axis robot is disposed in a cell (small room) is suitable for high-mix, low-volume production, facility costs are low, and it is easy to change the facility.

### [Cell production facility]

FIG. 10 is a plan view of a cell production facility.

As illustrated in FIG. 10, a cell production facility 50 includes a cell 53 surrounded by a wall 51 and a safety fence 52; an entrance 54 for carrying in a metal panel; a multi-axis robot 55 for transporting the metal panel; a first crimping device 20A to which a first lower crimping die and a first lower holder corresponding to a nut are attached; a second crimping device 20B to which a second lower crimping die and a second lower holder corresponding to a bolt are attached; a third crimping device 20C to which a third lower crimping die and a third lower holder corresponding to a special nut are attached; and an exit 56 for carrying out the metal panel to which the nut, the bolt, and the special nut are crimped. The entrance 54, the first crimping device 20A, the second crimping device 20B, the third crimping device 20C, and the exit 56 are arranged within the turning range of the multi-axis robot 55 and on the same circumference 57.

Since the entrance, the first crimping device, the second crimping device, and the exit are arranged on the same circumference, a more compact cell production facility is provided, and the metal panel is conveyed over the shortest distance, so that productivity is improved, which is an advantage.

Furthermore, the cell production facility 50 includes a cell-side control unit 58 that comprehensively controls a first control unit 43A, a second control unit 43B, a third control unit 43C, and the multi-axis robot 55. The cell-side control unit 58 receives crimping pass/fail determinations from the first control unit 43A, the second control unit 43B, and the third control unit 43C, stores, records, and displays the crimping pass/fail determinations, and stops production in the case of a fail. Maintenance or the like can be performed due to the stoppage.

Furthermore, the cell production facility 50 includes a plurality of grippers (for example, the first gripper 60A, a second gripper 60B, and a third gripper 60C) that grips the metal panel.

### [Gripper]

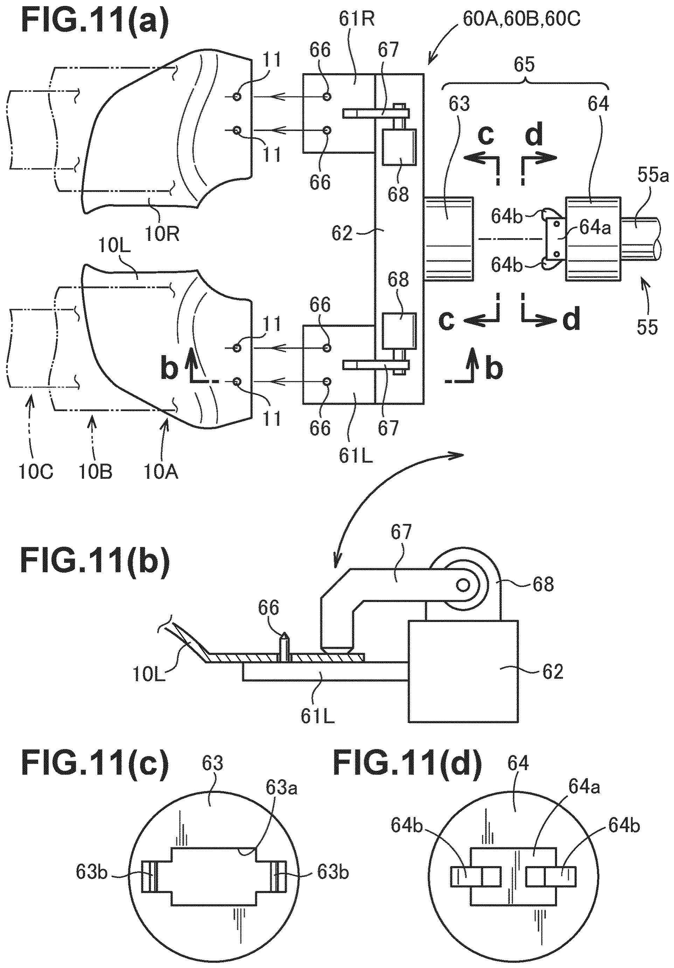

As illustrated in FIG. 11(a), a vehicle is composed of a left metal panel 10L (L is a subscript indicating the left) and a right metal panel 10R (R is a subscript indicating the right) such as a left door and a right door.

Therefore, the first gripper 60A includes a left gripping portion 61L corresponding to the left metal panel 10L; a right gripping portion 61R corresponding to the right metal panel 10R; a common frame 62 connecting the left gripping portion 61L and the right gripping portion 61R; and a jig-side automatic tool changer (ATC) 63 provided in the middle of the common frame 23. The jig-side ATC 63 and a robot-side ATC 64 constitute an automatic tool changer 65.

Furthermore, the left gripping portion 61L includes positioning pins 66 that are inserted into positioning holes 11 of the left metal panel 10L, and includes a clamp pawl 67 and a rotary actuator 68. The same applies to the right gripping portion 61R.

As illustrated in FIG. 11(b), the left metal panel 10L placed on the left gripping portion 61L and positioned by the positioning pins 66 is held down by the clamp pawl 67 that is rotated by the rotary actuator 68.

FIG. 11(c) is a view taken along arrow c-c in FIG. 11(a), and FIG. 11(d) is a view taken along arrow d-d in FIG. 11(a).

As illustrated in FIG. 11(c), the jig-side ATC 63 includes a fitting recess 63a and two left and right pins 63b.

As illustrated in FIG. 11(d), the robot-side ATC 64 includes a fitting protrusion 64a and two left and right pawls 64b.

The jig-side ATC 63 can be coupled to the robot-side ATC 64 by fitting the fitting protrusion 64a into the fitting recess 63a and hooking the pawls 64b onto the pins 63b.

The jig-side ATC 63 can be separated from the robot-side ATC 64 by removing the pawls 64b from the pins 63b.

In addition, in FIG. 11(a), when the left metal panel 10L and the right metal panel 10R constitute a first metal panel 10A, there generally exists a second metal panel 10B or a third metal panel 10C that differs from the first metal panel 10A in shape, size, or the like.

When the first metal panel 10A is gripped by the first gripper 60A, the second gripper 60B that grips a second metal panel 10B and the third gripper 60C that grips a third metal panel 10C are also prepared.

As illustrated in FIG. 10, the first gripper 60A, the second gripper 60B, and the third gripper 60C are disposed in the cell 53. One of the first gripper 60A, the second gripper 60B, and the third gripper 60C can be attached to the robot hand 55a of the multi-axis robot 55.

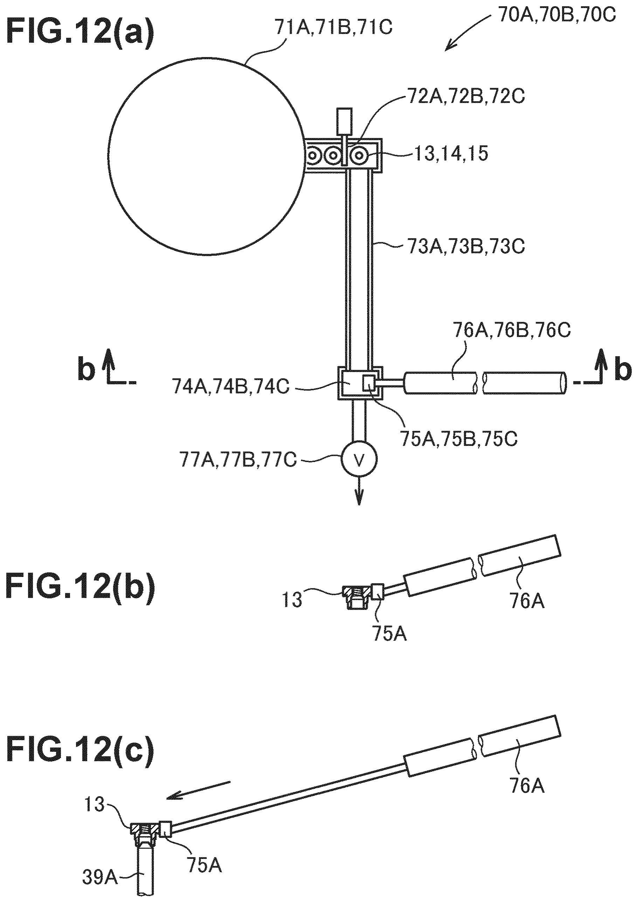

In addition, as illustrated in FIG. 10, a first parts feeder 70A is attached to the first crimping device 20A, a second parts feeder 70B is attached to the second crimping device 20B, and a third parts feeder 70C is attached to the third crimping device 20C. The structure of the first to third parts feeders 70A to 70C will be described with reference to FIG. 12.

### [Parts feeder]

As illustrated in FIG. 12(a), the first parts feeder 70A is composed of, for example, a first parts supply portion 71A that aligns nuts by vibrating the nuts, a first shutter 72A that separates one leading part from the following parts, a first pipe 73A that sends the one leading part via air conveyance, a first temporary placement portion 74A that is provided at the tip of the first pipe 73A and that temporarily places the part, the first magnetic head 75A that magnetically attracts the temporarily placed part (nut 13), and the first cylinder unit 76A that moves the first magnetic head 75A.

An air flow for air conveyance can be generated by a first vacuum pump 77A.

FIG. 12(b) is a cross-sectional view taken along line b-b in FIG. 12(a), and FIG. 12(c) is an operational view.

The nut 13 attracted by the first magnetic head 75A in FIG. 12(b) is moved to the first positioning pin 39A as illustrated in FIG. 12(c).

Since the second parts feeder 70B that supplies bolts and the third parts feeder 70C that supplies special nuts have the same structure as the first parts feeder 70A, detailed description thereof will be omitted.

### [Composite cell production facility]

A plurality of the cell production facilities 50 described with respect to FIG. 10 can also be arranged in a complex configuration.

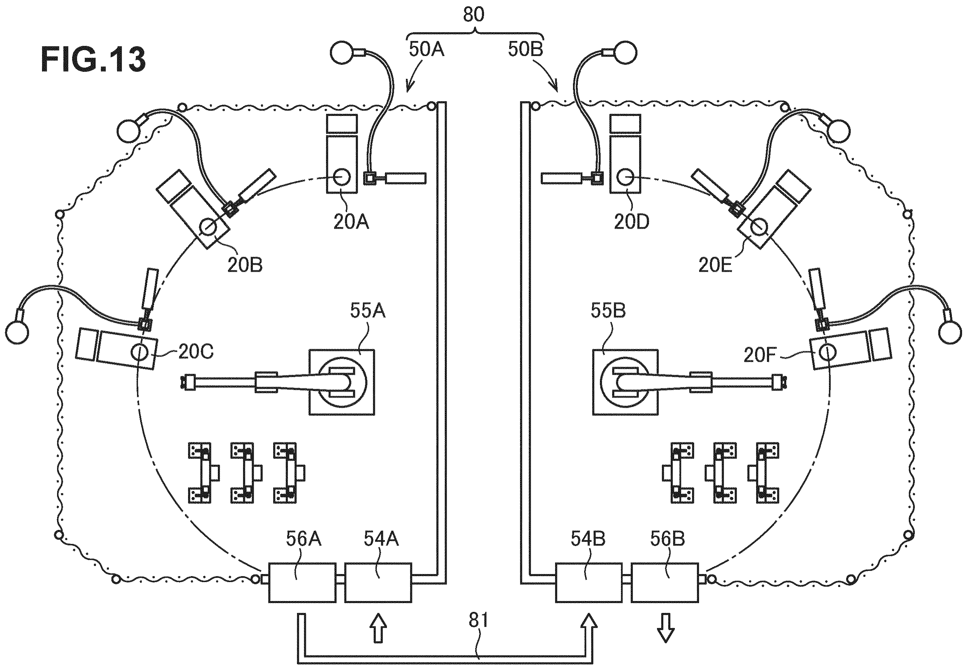

As illustrated in FIG. 13, a composite cell production facility 80 is composed of at least a first cell production facility 50A and a second cell production facility 50B.

A first entrance 54A, the first to third crimping devices 20A to 20C, a first articulated robot 55A, and a first exit 56A are disposed in the first cell production facility 50A.

A second entrance 54B, fourth to sixth crimping devices 20D to 20F, a second articulated robot 55B, and a second exit 56B are disposed in the second cell production facility 50B.

Furthermore, the metal panel is conveyed from the first exit 56A to the second entrance 54B through a conveying path 81.

Namely, the first cell production facility 50A and the second cell production facility 50B are connected by the common conveying path 81. Similarly, a third cell production facility may be connected to the second cell production facility 50B via a common conveying path, and furthermore, a fourth cell production facility may be connected to the third cell production facility.

Incidentally, the invention is suitable for application to a metal panel constituting a vehicle body; however, there is no problem with application to a metal panel other than that used in the vehicle body. For example, an aluminum panel and a steel panel are difficult to spot-weld. In this case, the production speed can be significantly increased by using the crimping device of the invention. In response to future vehicle body weight reduction, the invention can contribute to increasing the proportion of lightweight aluminum used.

In addition, according to the invention, when the upper and lower crimping dies are replaced, the positioning pin may be used as is without replacement.

In addition, according to the invention, the control unit only needs to at least one pass determination criterion. This is because there may be a case in which only one type of nut or bolt is crimped. However, in the case of crimping two types of nuts or bolts, the control unit stores the first pass determination criterion and the second pass determination criterion. In addition, in the case of crimping three types of nuts or bolts, the control unit may further store the third pass determination criterion.

In addition, in the case of cell production using a plurality of crimping devices, the cell-side control unit may integrate the control units of the individual crimping devices. Namely, when one crimping device of the invention is used, the control unit thereof performs storage, recording, display, production stop and maintenance in the case of a fail, and the like. In the case of a plurality of crimping devices as in cell production, the cell-side control unit may include the control units of the individual crimping devices.

### INDUSTRIAL APPLICABILITY

The invention is suitable for application to the metal panel constituting the vehicle body.

### EXPLANATIONS OF LETTERS OR NUMERALS

10 METAL PANEL
10A FIRST METAL PANEL
10B SECOND METAL PANEL
10L LEFT METAL PANEL
10R RIGHT METAL PANEL
13 NUT
14 BOLT
15 SPECIAL NUT
20 CRIMPING DEVICE
20A FIRST CRIMPING DEVICE
20B SECOND CRIMPING DEVICE
21 PRESS MACHINE (GENERAL-PURPOSE PRESS MACHINE)
22 VARIABLE HYDRAULIC CONTROL DEVICE
23 FRAME OF PRESS MACHINE
25 PRESSING SHAFT
26 BASE OF PRESS MACHINE
32 POST
33 LOWER CRIMPING DIE
33A FIRST LOWER CRIMPING DIE
33B SECOND LOWER CRIMPING DIE
34 LOWER HOLDER
34A FIRST LOWER HOLDER
34B SECOND LOWER HOLDER
35 UPPER CRIMPING DIE
35A FIRST UPPER CRIMPING DIE
35B SECOND UPPER CRIMPING DIE
36 UPPER HOLDER
36A FIRST UPPER HOLDER
36B SECOND UPPER HOLDER
37 STROKE DISPLACEMENT GAUGE (UPPER STROKE DISPLACEMENT GAUGE)
38 PRESSING FORCE GAUGE
39 POSITIONING PIN
39a FLAT SURFACE
39A FIRST POSITIONING PIN
39B SECOND POSITIONING PIN
42 LOWER STROKE DISPLACEMENT GAUGE
43 CONTROL UNIT
43A FIRST CONTROL UNIT
43B SECOND CONTROL UNIT
45 CAMERA
50 CELL PRODUCTION FACILITY
50A FIRST CELL PRODUCTION FACILITY
50B SECOND CELL PRODUCTION FACILITY
52 SAFETY FENCE
54, 54A, 54B ENTRANCE
55 MULTI-AXIS ROBOT
55a ROBOT HAND
56, 56A, 56B EXIT
57 CIRCUMFERENCE
60A GRIPPER (FIRST GRIPPER)
60B SECOND GRIPPER
61A FIRST GRIPPING PORTION
61B SECOND GRIPPING PORTION
65 AUTOMATIC TOOL CHANGER
66 POSITIONING PIN
70A, 70B FIRST AND SECOND PARTS FEEDERS
71A, 71B FIRST AND SECOND PARTS SUPPLY PORTIONS
73A, 73B FIRST AND SECOND PIPES
75A, 75B FIRST AND SECOND MAGNETIC HEADS
76A, 76B FIRST AND SECOND CYLINDER UNITS
80 COMPOSITE PRODUCTION FACILITY
81 CONVEYING PATH
L, L1 to L3 STROKE
P PRESSING FORCE
P1, P2 SET PRESSING FORCE

## Claims

1. A crimping device that crimps one of a nut and a bolt to a metal panel, comprising:
a stroke displacement gauge that measures a stroke when crimping is performed;
a pressing force gauge that measures a pressing force when crimping is performed; and
a control unit that determines whether a crimping result is a pass, based on stroke information from the stroke displacement gauge and pressing force information from the pressing force gauge,
wherein the control unit includes at least one of a first pass determination criterion for the nut and a second pass determination criterion for the bolt.

2. The crimping device according to claim 1, further comprising:
a variable hydraulic control device that changes hydraulic pressure such that the pressing force measured by the pressing force gauge becomes a set pressing force set in advance.

3. The crimping device according to claim 1, further comprising:
a post rising from a base of a press machine;
a lower holder removably attached to the post and holding a lower crimping die;
a pressing shaft suspended from a frame of the press machine; and
an upper holder removably attached to the pressing shaft and holding an upper crimping die.

4. The crimping device according to claim 3, further comprising:
a positioning pin that penetrates through the lower crimping die and that is lifted and lowered; and
a parts feeder that guides one of the nut and the bolt to the positioning pin and that places one of the nut and the bolt on the positioning pin.

5. The crimping device according to claim 4, further comprising:
a lower stroke displacement gauge that measures a lifting and lowering stroke of the positioning pin,
wherein the control unit determines that one of the nut and the bolt is placed on the positioning pin in a correct posture, based on stroke information from the lower stroke displacement gauge.

6. The crimping device according to claim 5,
wherein the first pass determination criterion and the second pass determination criterion are established based on the stroke information from the lower stroke displacement gauge when the positioning pin is brought into contact with the upper crimping die.

7. The crimping device according to claim 3, further comprising:
a camera that identifies a shape of one of the nut and the bolt placed between the lower crimping die and the upper crimping die,
wherein the control unit determines whether a posture of one of the nut and the bolt is correct, based on image information of the camera.

8. The crimping device according to claim 6,
wherein the positioning pin has a flat surface at a tip.

9. A cell production facility including a plurality of the crimping devices according to claim 1, comprising:
an entrance for carrying in the metal panel; a multi-axis robot that transports the metal panel;
a first crimping device to which a first lower crimping die and a first lower holder corresponding to the nut are attached;
a second crimping device to which a second lower crimping die and a second lower holder corresponding to the bolt are attached; and
an exit for carrying out the metal panel to which the nut and the bolt are crimped,
wherein the entrance, the first crimping device, the second crimping device, the exit are arranged within a turning range of the multi-axis robot and on the same circumference.

10. The cell production facility according to claim 9,
wherein the metal panel includes a first metal panel and a second metal panel that have different forms,
a first gripper that grips the first metal panel and a second gripper that grips the second metal panel are placed in the cell production facility, and
the cell production facility includes an automatic tool changer that selects and attaches the first gripper and the second gripper to the multi-axis robot.

11. The cell production facility according to claim 10,
wherein the first metal panel is composed of a left metal panel and a right metal panel that have different forms, and
the first gripper includes a left gripping portion that grips the left metal panel, and a right gripping portion that grips the right metal panel, and each of the left gripping portion and the right gripping portion includes a positioning pin.

12. The cell production facility according to claim 9,
wherein the exit is provided adjacent to the entrance.

13. The cell production facility according to claim 9,
wherein the cell production facility is surrounded by a safety fence,
the cell production facility includes a first parts feeder that guides the nut to the first crimping device, and the first parts feeder includes a first parts supply portion that is disposed outside the safety fence and that supplies the nuts one by one, and a first pipe that guides the nut supplied by the first parts supply portion to the first crimping device via air conveyance, and
the cell production facility includes a second parts feeder that guides the bolt to the second crimping device, and the second parts feeder includes a second parts supply portion that is disposed outside the safety fence and that supplies the bolts one by one, and a second pipe that guides the bolt supplied by the second parts supply portion to the second crimping device via air conveyance.

14. A composite cell production facility including a plurality of the cell production facilities according to claim 9, comprising:
a first cell production facility; and
a second cell production facility,
wherein the first cell production facility and the second cell production facility are connected by a common conveying path.
